# DEMANDE DE BREVET EUROPEEN

(11) **EP 1 593 933 A1**
(43) Date de publication de la demande: **09.11.2005**
(21) Numéro de dépôt: 05356074.4
(22) Date de dépôt: 03.05.2005
(51) Int. Cl.: G01C 15/02, G01B 11/26, G01B 3/10, G01B 5/24, B44D 3/38

(54) **Outil de reperage et de tracage**

(30) Priorité: 06.05.2004 FR 0405110
(71) Demandeur: DEFI - Distribution Europeenne de Fournitures Industrielles, 38160 Chatte (FR)
(72) Inventeur: Perazio, Gilles, 38160 Saint Marcellin (FR)
(74) Mandataire: Poncet, Jean-François

(57) **Abrégé**

Un outil selon l'invention comprend un boîtier (1) ayant deux faces d'appui (2, 3) allongées planes perpendiculaires l'une à l'autre selon deux directions longitudinales (I-I ; II-II). Une première source de rayon laser (18) génère une ligne de rayon laser (18a) selon la première direction longitudinale (I-I). Des niveaux à bulle (8, 9) permettent de contrôler l'horizontalité d'une face d'appui. Un moyen de repérage linéaire escamotable (10) tel qu'un cordeau traceur (10a) ou un ruban gradué est adapté pour se déployer selon la seconde direction longitudinale (II-II) en prolongement de !a seconde face d'appui (3) et pour s'escamoter dans le boîtier (1) par enroulement sur une bobine (12) munie d'une manivelle (15). Un tel outil permet de faciliter considérablement le repérage et le traçage de lignes sur un chantier, et constitue un objet unitaire aisément transportable.

## Description

### DOMAINE TECHNIQUE DE L'INVENTION

La présente invention concerne les outils que l'on doit utiliser pour tracer des traits repérés les uns par rapport aux autres dans l'industrie du bâtiment.

Les repérages et tracés de lignes nécessitent généralement des mesures de longueurs, des mesures d'angles, des tracés de lignes, des repérages d'horizontalité ou de verticalité, ce qui nécessite généralement plusieurs outils : les longueurs sont mesurées avec des règles ; les angles sont mesurés avec des rapporteurs ; les tracés sont effectués par un cordeau traceur c'est-à-dire un cordeau chargé d'une poudre qui se dépose sur une surface lors d'une vibration du cordeau ; les niveaux ou horizontalités sont repérés par des niveaux à bulle, la verticale est repérée par un fil à plomb.

Ainsi, ces opérations nécessitent généralement l'utilisation successive ou simultanée de plusieurs outils distincts.

Par exemple, pour tracer une ligne parallèle à une ligne repère, sur une surface plane donnée, on peut générer une ligne de rayonnement laser à l'aide d'un dispositif à niveaux à bulles et à générateur de ligne laser tel que décrit dans les documents US 2002/0178598 ou WO 02/093108, et placer cette ligne laser parallèlement au repère, en mesurant la distance avec la ligne repère jusqu'à ce que cette distance soit constante. Puis il faut matérialiser le tracé par un trait de craie réalisé à l'aide d'un cordeau traceur que l'on aligne le long de la ligne laser. On constate la nécessité de manipuler plusieurs moyens de mesure et de traçage.

Les moyens de mesure et de traçage constituent des objets distincts, qu'il est assez peu commode de déplacer pour effectuer des opérations successives en plusieurs endroits d'un chantier. La tenue de plusieurs objets est en effet malaisée, et il y a toujours un risque de chute ou de perte de l'un ou l'autre des moyens de mesure ou de traçage lors du transport, sans compter le risque d'oubli dans une zone ou l'autre d'un chantier.

Et si l'un des moyens de mesure ou de tracé manque, l'opération n'est plus possible, ou devient très imprécise.

### EXPOSE DE L'INVENTION

Le problème proposé par la présente invention est ainsi de concevoir un nouvel outil de repérage et de traçage, qui combine en lui-même de façon appropriée plusieurs moyens de traçage et de repérage, constituant un ensemble monobloc unitaire dont le transport est facilité, chaque moyen de repérage ou de traçage étant disposé de façon à garantir une précision acceptable des mesures ou des tracés sans interférer sur la précision des autres moyens de l'outil.

L'invention vise à réaliser un tel outil dans lequel chaque moyen de repérage ou de traçage soit directement accessible à l'utilisateur, et qui constitue un ensemble compact et robuste, ajoutant une grande commodité de transport et de préhension.

Pour atteindre ces buts ainsi que d'autres, l'invention propose de façon générale un outil de repérage et de traçage, comprenant un boîtier ayant une première et une seconde faces d'appui allongées planes perpendiculaires l'une à l'autre et se développant chacune dans une direction longitudinale respective, ayant au moins une première source de rayon laser adaptée pour générer un premier rayon laser le long de la première direction longitudinale, et ayant un ou plusieurs niveaux à bulle adaptés pour contrôler l'horizontalité d'une face d'appui, et comprenant en outre au moins un moyen de repérage linéaire escamotable, adapté pour se déployer selon la seconde direction longitudinale en prolongement de la seconde face d'appui et pour s'escamoter dans le boîtier en s'enroulant sur une bobine prévue dans le boîtier.

On comprend que le boîtier lui-même, avec les deux faces d'appui perpendiculaires, constitue une équerre pour la mesure d'angles droits. Par le fait que l'outil peut reposer sur le sol par l'une des faces d'appui planes, l'autre face d'appui permet alors de repérer la verticale. La première source de rayons laser permet de matérialiser la première direction longitudinale, pour un tracé ultérieur ou pour un repérage par rapport à une zone distante. Le ou les niveaux à bulle permettent de contrôler l'horizontalité d'une face d'appui, ce qui permet simultanément de contrôler la verticalité de l'autre face d'appui. On peut ainsi contrôler l'horizontalité et/ou la verticalité du trait laser produit par la première source de rayon laser dans la première direction longitudinale. Et le moyen de repérage linéaire escamotable, qui prolonge la seconde face d'appui, permet un repérage perpendiculaire à la première face d'appui, par exemple pour fixer une direction perpendiculaire ou pour mesurer une distance.

Selon un premier mode de réalisation, le moyen de repérage linéaire escamotable est un ruban flexible gradué de mesure de longueur. Il est alors possible de matérialiser directement, avec le rayon laser, une ligne parallèle à une ligne repère dont la distance est mesurée simultanément par le moyen de repérage linéaire escamotable.

Selon un second mode de réalisation, le moyen de repérage linéaire escamotable est un cordeau traceur, à cordeau s'enroulant sur la bobine et associé à une réserve de poudre à tracer qu'il traverse entre la bobine et un orifice de sortie au voisinage de l'extrémité distale de la seconde face d'appui. De la sorte, le cordeau traceur permet de tracer directement une ligne perpendiculaire à la première face d'appui, ce qui permet de tracer simultanément plusieurs lignes parallèles entre elles qui sont toutes perpendiculaires à une base linéaire contre laquelle repose la première face d'appui.

De préférence, la première source de rayon laser est adaptée pour générer une nappe de rayonnement laser dans le plan longitudinal médian contenant les deux directions longitudinales, de façon à tracer une ligne lumineuse sur une surface plane sur laquelle porte la première face d'appui. Cela évite ainsi, pour matérialiser une première ligne, d'avoir à tracer une ligne à l'aide d'un cordeau traceur passant par un point lumineux distant réalisé par le rayon laser.

On peut ajouter avantageusement une seconde source de rayon laser, adaptée pour générer un second rayon laser le long de la seconde direction longitudinale, de façon à marquer un point sur une surface distante. Cela peut faciliter un repérage distant selon la seconde direction longitudinale.

On prévoit de préférence deux niveaux à bulle, orientés le premier pour contrôler l'horizontalité de la première face d'appui dans la première direction longitudinale, le second pour contrôler l'horizontalité de la première face d'appui dans la direction transversale. Une première fonction est alors de placer la première face d'appui en orientation horizontale contrôlée par les niveaux à bulle, pour contrôler l'horizontalité de la surface contre laquelle est posée la première face d'appui, ou pour contrôler la verticalité d'une surface contre laquelle est appliquée la seconde face d'appui. Une seconde fonction est réalisée en appliquant la première face d'appui contre une surface sensiblement verticale, le second niveau à bulle transversal permettant de contrôler directement la verticalité de ladite surface. Une troisième fonction est réalisée en générant un trait laser sur un mur par la première source laser, le second niveau à bulle transversal permettant de placer rapidement le trait laser en orientation verticale.

La manutention peut être améliorée en prévoyant une poignée de manipulation, dans l'angle aigu compris entre les faces d'appui. La poignée de manipulation peut avantageusement être de forme annulaire, en étant déportée vers la première face d'appui, tandis que la bobine d'enroulement du moyen de repérage linéaire escamotable est déportée vers la seconde face d'appui.

L'outil peut être utilisé sur les chantiers pour tracer des lignes ou faire des repérages dans des positions les plus diverses. En particulier, il peut être intéressant de fixer l'outil sur un mur ou sur une banche à béton. Pour cela, on peut avantageusement prévoir que les faces d'appui présentent une section transversale en queue-d'aronde, leur surface ayant une largeur supérieure à celle du corps de boîtier et se raccordant au corps de boîtier par des facettes obliques rentrantes sur lesquelles peuvent se fixer des accessoires permettant la fixation de l'outil contre un mur ou autre support.

Il est également possible d'intégrer, dans les faces d'appui de l'outil, des éléments permettant la fixation directe de l'outil sur différents supports. Par exemple, ces éléments peuvent être des aimants, pour fixation sur des surfaces métalliques, ou peuvent être des ventouses, pour fixation sur des surfaces lisses telles que la céramique, la faïence, le plâtre.

Une capacité de mesure complémentaire peut être obtenue en prévoyant une face à 45° se développant depuis l'extrémité libre de la seconde face d'appui et en direction de l'extrémité libre de la première face d'appui. On peut alors tracer un angle à 45° directement en utilisant la seconde face d'appui et la face à 45°.

On peut également augmenter les capacités de mesure et de repérage en prévoyant des graduations linéaires le long d'au moins un bord des faces d'appui, par exemple sur les facettes obliques rentrantes.

Egalement, une graduation angulaire peut être prévue sur une face latérale du boîtier, centrée sur l'intersection des faces d'appui. Dans ce cas, une encoche transversale peut avantageusement être prévue à l'intersection des faces d'appui, permettant l'engagement d'un cordeau dans l'encoche transversale, le cordeau longeant ensuite la face latérale du corps d'outil muni de la graduation angulaire, pour le repérage d'un angle aigu à l'intérieur de l'angle droit constitué par les deux faces d'appui.

La bobine peut être sollicitée par un ressort de rappel en rotation, ou peut avantageusement être sollicitée en rotation par une manivelle que l'utilisateur peut actionner pour enrouler et escamoter ainsi le moyen de repérage linéaire escamotable.

### DESCRIPTION SOMMAIRE DES DESSINS

D'autres objets, caractéristiques et avantages de la présente invention ressortiront de la description suivante de modes de réalisation particuliers, faite en relation avec les figures jointes, parmi lesquelles :
- la figure 1 est une vue de face d'un outil de repérage et de traçage selon un mode de réalisation de la présente invention ;
- la figure 2 est une vue du côté gauche de l'outil de la figure 1 ;
- la figure 3 est une vue de dessus de l'outil de la figure 1 ; et
- la figure 4 est une vue de face de l'outil de la figure 1, boîtier ouvert.

### DESCRIPTION DES MODES DE REALISATION PREFERES

Dans le mode de réalisation illustré sur les figures, un outil de repérage et de traçage selon l'invention comprend un boîtier 1 de forme générale plate triangulaire, limitée par une première face d'appui 2 allongée plane, par une seconde face d'appui 3 allongée plane, par deux faces latérales 4 et 5, et par une face de liaison 6.

Les première et seconde faces d'appui 2 et 3 allongées planes sont perpendiculaires l'une à l'autre, et se développent chacune dans une direction longitudinale respective I-I ou II-II.

Une poignée de manipulation 7 est prévue dans l'angle aigu prévu entre les faces d'appui 2 et 3.

Dans l'exemple illustré, la poignée de manipulation 7 est de forme annulaire, facilitant la prise en main dans toutes les orientations d'inclinaison de l'outil, c'est-à-dire notamment dans les orientations entre une première orientation dans laquelle la première face d'appui 2 est horizontale et une seconde orientation dans laquelle la seconde face d'appui 3 est horizontale. Dans le premier cas, on porte l'outil en plaçant la main dans la zone distale 7a de la poignée 7. Dans le second cas, on porte l'outil en plaçant la main dans la zone proximale 7b de la poignée 7.

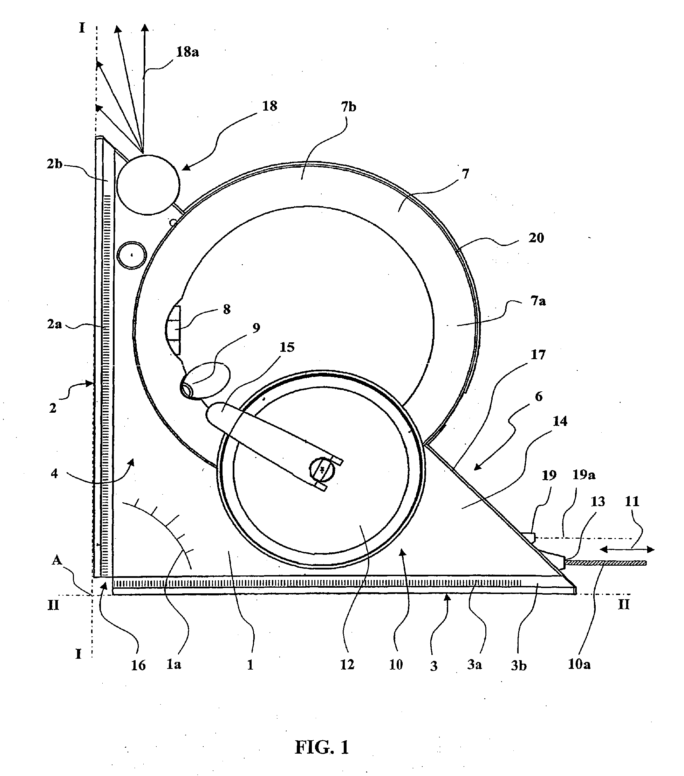

La poignée 7 peut avantageusement être déportée en direction de la première face d'appui 2, comme illustré sur la figure 1, pour laisser un espace supplémentaire dans le boîtier 1 entre la poignée 7 et la seconde face d'appui 3, pour le logement d'autres moyens de repérage ou de mesure.

Dans le boîtier, on prévoit un ou plusieurs niveaux à bulle adaptés pour contrôler l'horizontalité d'au moins une face d'appui. Dans l'exemple illustré, on prévoit un premier niveau à bulle 8, orienté parallèlement à la première direction longitudinale I-I, et on prévoit un second niveau à bulle 9 orienté selon une direction perpendiculaire au plan formé par les deux directions longitudinales I-I et II-II. Un tel couple de niveaux à bulle 8 et 9 permet de contrôler l'horizontalité de la première face d'appui 2 lorsque celle-ci doit être orientée horizontalement : le premier niveau à bulle 8 permet de contrôler l'horizontalité de la première face d'appui 2 dans la première direction longitudinale I-I, le second niveau à bulle 9 permet de contrôler l'horizontalité de la première face d'appui 2 dans la direction transversale.

L'outil comporte en outre au moins un moyen de repérage linéaire escamotable 10, adapté pour se déployer selon la seconde direction longitudinale II-II en prolongement de la seconde face d'appui 3 comme illustré par la flèche 11, et pour s'escamoter dans le boîtier 1 en s'enroulant sur une bobine 12 prévue dans le boîtier 1.

La bobine 12 est de préférence disposée au voisinage de la seconde face d'appui 3, ce qui, lorsque la poignée de manipulation 7 est déportée vers la première face d'appui 2, permet de loger une bobine 12 relativement grande pour l'enroulement d'une grande longueur du moyen de repérage linéaire escamotable 10.

Selon une première application, le moyen de repérage linéaire escamotable 10 peut être un ruban flexible gradué de mesure de longueur, pour mesurer une longueur depuis la première face d'appui 2 jusqu'à un point distant dans la seconde direction longitudinale II-II.

Selon une autre application, le moyen de repérage linéaire escamotable 10 est un cordeau traceur, constitué d'un cordeau 10a enroulé sur la bobine 12 et dont l'extrémité reste à l'extérieur du boîtier 1 pour sa préhension. Le cordeau 10a sort du boîtier 1 par un orifice 13 voisin de l'extrémité libre de la seconde face d'appui 3. Entre l'orifice 13 et la bobine 12, le cordeau 10a traverse de préférence une réserve de poudre à tracer 14.

Lors de l'utilisation, on peut sortir le cordeau 10a en tirant son extrémité dans la seconde direction longitudinale II-II à l'écart de l'outil, le cordeau 10a étant alors chargé de poudre. On peut placer le cordeau 10a contre une surface réceptrice plane, et produire une vibration du cordeau 10a qui vient frapper la surface d'appui en libérant alors une quantité appropriée de poudre qui matérialise un tracé dans la seconde direction longitudinale II-II. On peut ensuite enrouler le cordeau 10a sur la bobine 12. On prévoit pour cela que la bobine 12 est sollicitée en rotation par un ressort de rappel, ou, de préférence, par une manivelle 15 que l'utilisateur peut actionner pour enrouler et escamoter le moyen de repérage linéaire escamotable 10.

Des graduations linéaires 2a et 3a peuvent être prévues respectivement le long d'au moins un bord des faces d'appui 2 et 3, pour réaliser des mesures de longueurs courtes, et pour un repérage rapide et le traçage des lignes parallèles (traçage d'épaisseur de cloisons, frise pour peintre).

Une graduation angulaire 1 a peut être prévue sur une face latérale 4 du boîtier 1, centrée sur l'intersection A des faces d'appui 2 et 3. On notera, sur la figure 1, la présence d'une encoche transversale 16 à l'intersection A des faces d'appui 2 et 3. Comme précédemment indiqué, cette encoche transversale 16 permet l'engagement d'un cordeau pour le repérage d'un angle aigu. Une autre fonction de cette encoche transversale 16 est de permettre un positionnement précis de l'outil à partir d'un point, rendant possible un alignement.

La face de liaison 6 peut comporter une face 17 à 45°, qui se développe depuis l'extrémité libre de la seconde face d'appui 3 et en direction de l'extrémité libre de la première face d'appui 2.

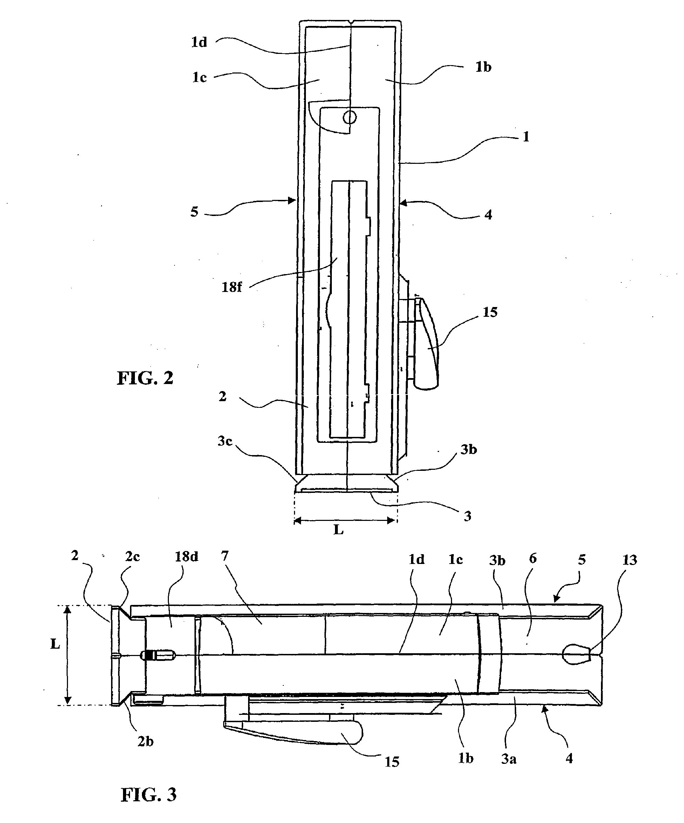

En considérant les vues des figures 2 et 3, on voit que les faces d'appui 2 et 3 ont une section transversale en queue-d'aronde, leur surface ayant une largeur L supérieure à celle de la partie centrale du boîtier 1 et se raccordant à la partie centrale du boîtier 1 par des facettes obliques rentrantes, respectivement 2b et 2c, 3b et 3c, sur lesquelles peuvent se fixer des accessoires permettant la fixation de l'outil contre un mur ou autre support. On peut notamment concevoir des accessoires munis de plaques aimantées qui assurent une fixation satisfaisante contre une banche métallique de coulée de béton, et des accessoires munis de ventouses et de butées d'appui qui assurent une fixation satisfaisante contre une surface lisse. Les facettes obliques rentrantes peuvent avantageusement recevoir les graduations linéaires telles que 2a et 3a.

En alternative aux accessoires rapportés de fixation, les faces d'appui 2 et 3 peuvent comprendre, intégrés dans leur épaisseur, des éléments de fixation tels que des aimants ou des ventouses à butée d'appui pour fixation respectivement sur des surfaces métalliques ou sur des surfaces lisses.

On prévoit, au voisinage de l'extrémité libre de la première face d'appui 2, une première source de rayon laser 18, adaptée pour générer un premier rayon laser 18a le long de la première direction longitudinale I-I. De préférence, la première source de rayon laser 18 est adaptée pour générer une nappe de rayonnement laser 18a dans le plan longitudinal médian contenant les deux directions longitudinales I-I et II-II. De cette façon, la source laser matérialise une ligne lumineuse sur une surface plane sur laquelle porte la première face d'appui 2, par exemple sur un mur ou sur le sol.

Les bulles des niveaux à bulles 8 et 9 sont de préférence en alignement avec la première source de rayon laser 18, afin d'obtenir une grande précision.

On peut également prévoir une seconde source de rayon laser 19, disposée à proximité de l'extrémité libre de la seconde face d'appui 3, et adaptée pour générer un second rayon laser 19a le long de la seconde direction longitudinale II-II, de façon à marquer un point sur une surface distante.

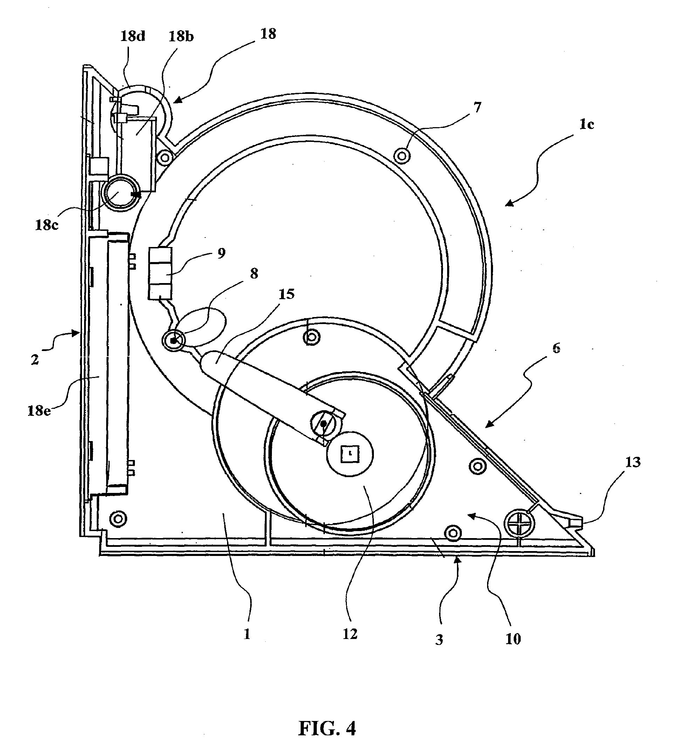

En pratique, la première source de rayon laser 18, illustrée plus en détail sur la figure 4, comporte un bloc laser 18b avec un bouton de marche-arrêt 18c, générant un rayon laser diffusé par des moyens optiques pour réaliser la nappe de rayonnement laser 18a, la sortie étant protégée par une coque 18d. Le bloc laser 18b est alimenté en énergie électrique par des piles engagées dans un boîtier de piles 18e accessible par une trappe amovible 18f (figure 2).

Une marque 20 peut être prévue sur la poignée de manipulation 7, pour repérer un angle de 45° centré sur l'intersection A des lignes longitudinales I-I et II-II. Cela vient compléter les repérages possibles avec la graduation angulaire 1 a.

Le boîtier 1 peut avantageusement être constitué de l'assemblage de deux coques triangulaires 1 b et 1 c dont le plan de joint 1 d se situe dans le plan des lignes longitudinales I-I et II-II.

La réserve de poudre à tracer 14 peut être accessible par une trappe amovible selon la face de liaison 6, par exemple pour le remplissage de poudre.

La manivelle 15 peut être reliée à la bobine 12 par un mécanisme pouvant comporter un embrayage et un système d'engrenage pour un rembobinage rapide.

L'outil ainsi défini selon l'invention permet notamment une prise d'aplomb, un niveau horizontal, un repérage vertical, un repérage d'angle, et leur traçage sur tout support.

Diverses utilisations sont rendues possibles par la combinaison des caractéristiques de l'invention, et notamment : positionnement d'un tube, visualisation de son emplacement avant traçage, prolongement de l'équerre sur une grande distance, positionnement de cloisons, réalisation de bacs à douche ...

La présente invention n'est pas limitée aux modes de réalisation qui ont été explicitement décrits, mais elle en inclut les diverses variantes et généralisations contenues dans le domaine des revendications ci-après.

## Revendications

1. Outil de repérage et de traçage, comprenant un boîtier (1) ayant une première (2) et une seconde (3) faces d'appui allongées planes perpendiculaires l'une à l'autre et se développant chacune dans une direction longitudinale respective (I-I ; II-II), ayant au moins une première source de rayon laser (18) adaptée pour générer un premier rayon laser (18a) le long de la première direction longitudinale (I-I), et ayant un ou plusieurs niveaux à bulle (8, 9) adaptés pour contrôler l'horizontalité d'une face d'appui, **caractérisé en ce qu'**il comprend en outre au moins un moyen de repérage linéaire escamotable (10), adapté pour se déployer selon la seconde direction longitudinale (II-II) en prolongement de la seconde face d'appui (3) et pour s'escamoter dans le boîtier (1) en s'enroulant sur une bobine (12) prévue dans le boîtier (1).

2. Outil selon la revendication 1, **caractérisé en ce que** le moyen de repérage linéaire escamotable (10) est un ruban flexible gradué de mesure de longueur.

3. Outil selon la revendication 1, **caractérisé en ce que** le moyen de repérage linéaire escamotable (10) est un cordeau traceur, à cordeau (10a) s'enroulant sur la bobine (12) et associé à une réserve de poudre à tracer (14) qu'il traverse entre la bobine (12) et un orifice de sortie (13) au voisinage de l'extrémité distale de la seconde face d'appui (3).

4. Outil selon l'une quelconque des revendications 1 à 3, **caractérisé en ce que** la première source de rayon laser (18) est adaptée pour générer une nappe de rayonnement laser (18a) dans le plan longitudinal médian contenant les deux directions longitudinales (I-I ; II-II), de façon à tracer une ligne lumineuse sur une surface plane sur laquelle porte la première face d'appui (2).

5. Outil selon l'une quelconque des revendications 1 à 4, **caractérisé en ce qu'**il comprend en outre une seconde source de rayon laser (19), adaptée pour générer un second rayon laser (19a) le long de la seconde direction longitudinale (II-II), de façon à marquer un point sur une surface distante.

6. Outil selon l'une quelconque des revendications 1 à 5, **caractérisé en ce qu'**il comprend deux niveaux à bulle (8, 9), orientés le premier (8) pour contrôler l'horizontalité de la première face d'appui (2) dans la première direction longitudinale (I-I), le second (9) pour contrôler l'horizontalité de la première face d'appui (2) dans la direction transversale.

7. Outil selon l'une quelconque des revendications 1 à 6, **caractérisé en ce qu'**il comprend une poignée de manipulation (7), dans l'angle aigu compris entre les faces d'appui (2, 3).

8. Outil selon la revendication 7, **caractérisé en ce que** la poignée de manipulation (7) est de forme annulaire, déportée vers la première face d'appui (2), tandis que la bobine (12) d'enroulement du moyen de repérage linéaire escamotable (10) est déportée vers la seconde face d'appui (3).

9. Outil selon l'une quelconque des revendications 1 à 8, **caractérisé en ce que** les faces d'appui (2, 3) ont une section transversale en queue-d'aronde, leur surface ayant une largeur (L) supérieure à celle de la partie centrale du boîtier (1) et se raccordant à la partie centrale du boîtier (1) par des facettes obliques rentrantes (2b, 2c, 3b, 3c) sur lesquelles peuvent se fixer des accessoires permettant la fixation de l'outil contre un mur ou autre support.

10. Outil selon l'une quelconque des revendications 1 à 8, **caractérisé en ce que** les faces d'appui (2, 3) comprennent, intégrés dans leur épaisseur, des éléments de fixation tels que des aimants ou des ventouses à butée d'appui pour fixation respectivement sur des surfaces métalliques ou sur des surfaces lisses.

11. Outil selon l'une quelconque des revendications 1 à 10, **caractérisé en ce qu'**une face à 45° (17) se développe depuis l'extrémité libre de la seconde face d'appui (3) et en direction de l'extrémité libre de la première face d'appui (2).

12. Outil selon l'une quelconque des revendications 1 à 11, **caractérisé en ce que** des graduations linéaires (2a, 3a) sont prévues ie long d'au moins un bord des faces d'appui (2, 3).

13. Outil selon l'une quelconque des revendications 1 à 12, **caractérisé en ce qu'**une graduation angulaire (1a) est prévue sur une face latérale (4) du boîtier (1), centrée sur l'intersection (A) des faces d'appui (2, 3), et une encoche transversale (16) est prévue à l'intersection (A) des faces d'appui (2, 3).

14. Outil selon l'une quelconque des revendications 1 à 13, **caractérisé en ce que** la bobine (12) est sollicitée en rotation par une manivelle (15) que l'utilisateur peut actionner pour enrouler et escamoter le moyen de repérage linéaire escamotable (10).
